# EUROPÄISCHE PATENTSCHRIFT

(11) **EP 1 211 453 B1**
(45) Veröffentlichungstag und Bekanntmachung des Hinweises auf die Patenterteilung: **16.11.2005**
(21) Anmeldenummer: 01128332.2
(22) Anmeldetag: 29.11.2001
(51) Int. Cl.: F16L 3/01, F16L 11/127

(54) **Energiezuführung**
Energy supply
Alimentation en énergie

(30) Priorität: 01.12.2000 DE 10059639
(43) Veröffentlichungstag der Anmeldung: 05.06.2002
(73) Patentinhaber: DeLu Luftkissen Transportgerätetechnik GmbH, 90411 Nürnberg (DE)
(72) Erfinder: Michels, Hartwig, Dr., 90411 Nürnberg (DE); Kluge, Peter Heinrich, 90411 Nürnberg (DE)
(74) Vertreter: Patentanwälte Zellentin & Partner

(56) Entgegenhaltungen:
- GB-A- 2 295 875
- US-A- 3 085 135
- US-A- 4 336 415

## Beschreibung

Die Erfindung betrifft eine Energiezuführung zu einem bewegbaren Verbrauchsmittel 7 wie einem Transportmittel.

Eine gattungsgemäße Energiezuführung wird z.B. in Dokument US 3 085 135 beschrieben.

Derartige Energiezuführungen sind für Fahrzeuge z. B. Luftkissenfahrzeuge bekannt. Sie weisen eine den Bewegungsradius des Fahrzeugs erweiternde Energieschleife auf, die in der Regel aus einer ortsfesten Zuführung besteht, die über Kupplungen mit einem zum Fahrzeug geführten Schlauch verbunden ist, durch den z.B. ein Antriebsmedium wie Druckluft oder Hydraulikflüssigkeit dem Fahrzeug zugeführt wird.

Im Luftkissenfahrzeug kann zusätzlich ein Schlauch/Kabel-Aufroller eingebaut sein, der an der Energieschleife, die an Hallenstützen oder Hallenwänden befestigt ist, angeschlossen ist. Durch diese Kombination kann man Flächen von 10.000 m² mit den Fahrzeugen bestreichen.

Wenn z.B. große Volumina an Druckluft zuzuführen sind, ist es erforderlich Schläuche mit relativ großen Durchmessern zu verwenden, die teuer und schwer sind.

Aufgabe der Erfindung ist es eine Energiezuführung dahingehend zu gestalten, daß zumindestens in den Energieschleifen Schläuche mit geringerem Volumen und leichterem Gewicht ohne Verluste an der Energiezufuhr einsetzbar sind.

Eine weitere Aufgabe der Erfindung besteht darin, weitere Energieträger und/oder Datenträger einem Verbrauchsmittel zuführen zu können. Diese Aufgabe wird durch eine Energiezuführung der eingangs genannten Art mit den kennzeichnenden Merkmalen des Anspruchs 1 gelöst.

Durch den Ringkanal bestehen zwei separate Schlauchzweige, die beide zur gemeinsamen Zufuhr eines großen Volumens eines Energiemittels oder auch einzeln zur Zufuhr zweier Energiemittel eingesetzt werden können.

Vorteilhafte Ausgestaltungen der Erfindung sind den Unteransprüchen zu entnehmen.

Nachstehend wird die Erfindung anhand eines Ausführungsbeispiels unter Bezug auf Zeichnungen näher erläutert. Es zeigt:
- Fig. 1: eine Energiezuführung mit bewegbaren flexiblen Ringkanal in einer Endstellung;
- Fig. 2: dasselbe wie in Fig. 1 in der anderen Endstellung;

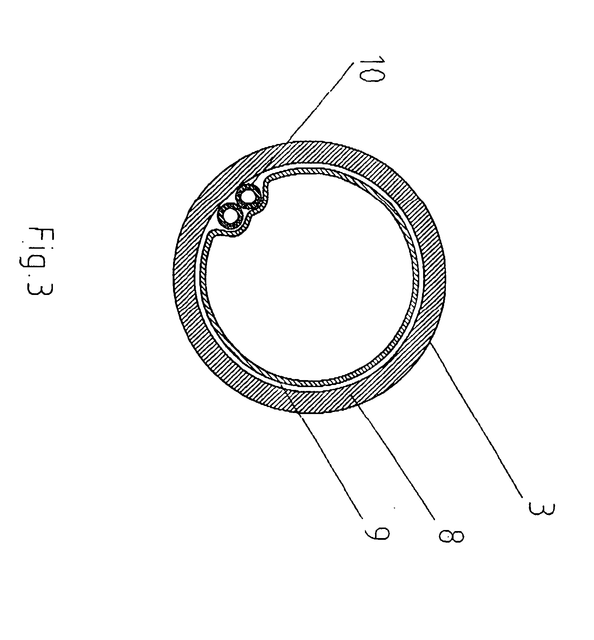

- Fig. 3: einen Querschnitt durch einen Ringkanal.

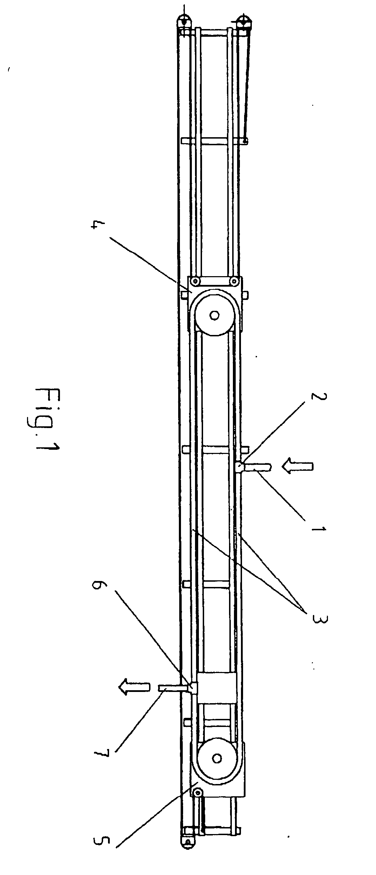

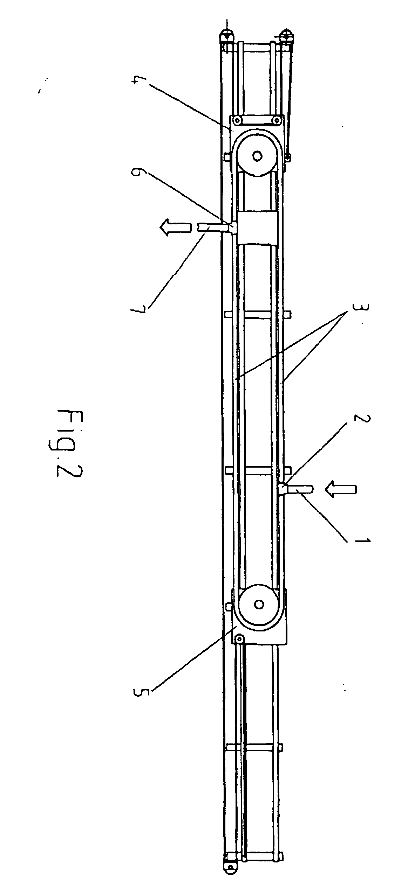

Das dargestellte Ausführungsbeispiel der Erfindung besteht aus einer ortsfest angeordneten Zufuhrleitung 1, die beispielsweise an eine Druckluft- oder Druckflüssigkeitsquelle angeschlossen ist. Die Zufuhrleitung 1 ist über eine erste Kupplung 2 mit einem flexiblen Ringkanal 3 verbunden. Der flexible Ringkanal 3 ist über zwei Umlenkwagen 4, 5 geführt und an der der Seite der Zufuhrleitung 1 gegenüberliegenden Seite des gebildeten Ringes mit einer zweiten Kupplung 6 versehen, die zum Anschluß eines zum Verbrauchsmittel führenden Schlauchs 7 dient. Die Umlenkwagen 3, 4 und ein Halteblock für die Kupplung 6 sind auf einer Führung beweglich angeordnet (z.B. einer Schiene gemäß Fig. 1 und 2).

Die Kupplung 6 ist derart angeordnet, daß sie zwischen den Umlenkwagen 4 und 5 bei deren Bewegung verfahrbar ist, d.h. bewegt wird. Die Verfahrbarkeit kann durch die in den Figuren 1 und 2 dargestellte Zwangsverbindung realisiert sein, durch die auch der Abstand zwischen den beiden Umlenkwagen 4, 5 konstant gehalten wird.

Der flexible Ringkanal 3 besteht aus einem äußeren Trägerschlauch 8, der beispielsweise aus einem - z.B. mit einem Gewebe verstärktem - üblichen Schlauch aus einem Gummi- oder Kunststoffmaterial bestehen kann, in den ein flexibler dünner, beispielsweise mit einer üblichen Wandstärke von 1 - 3 mm, Einlageschlauch 9 eingeführt ist. Vorzugsweise ist der Einlageschlauch 9 durch Aramidfasern verstärkt. Der Schlauch 7 zur Zufuhr des Energiemittels zum jeweiligen Fahrzeug als auch der auf dem Aufroller im Fahrzeug angeordnete Schlauch, kann entsprechend aufgebaut sein. Da der äußere Trägerschlauch nicht so hohe Drücke aushalten muß, kann er auch geringmächtiger und damit auch billiger sein.

Gemäß einer weiteren vorteilhaften Ausgestaltung der Erfindung sind zwischen den Trägerschlauch 8 und den Einlageschlauch 9 weitere Leitungen 10 eingeführt, z.B. elektrische Kabel, Datenübertragungskabel, weitere flexible Leitungen zur Zuführung von Druckluft, Druckflüssigkeit oder dergleichen. Die Leitungen 10 treten in den Ringkanal 3 z.B. an der ortsfesten Zufuhrleitung 1 ein bzw. aus und durch die Kupplung 6, die gegebenenfalls auch ein Verteiler sein kann, in den Verbindungsschlauch 7 zum Verbrauchsmittel ein bzw. aus, gegebenenfalls können dort auch Verbinder, z.B. Steckverbindungen vorgesehen sein.

Wird durch die Zufuhrleitung 1 Druckluft in die Ringleitung 3 zugeführt, legt sich der dünne Einlageschlauch 9 an den Trägerschlauch 8 an und alle zwischen ihnen angeordneten Leitungen 10 werden fixiert und sind so vor äußeren mechanischen Beschädigungen geschützt, ohne daß weitere Probleme, z.B. Abdichtungsprobleme, entstehen.

Die Beweglichkeit von Fahrzeugen als Beispiel für Verbrauchsmittel hängt ausschließlich von der Größe bzw. dem Umfang des Ringkanals 3 ab und ist ohne großen Aufwand leicht an unterschiedliche Bedingungen anpaßbar, wobei noch übliche Standardkomponenten eingesetzt werden können.

Die Energiezufuhr ist nicht auf Fahrzeuge beschränkt und kann überall dort eingesetzt werden wo entweder eine Energiequelle und/oder ein Verbrauchsmittel Bewegungen durchführen müssen, wobei überall Schläuche mit dem erfindungsgemäßen Aufbau einsetzbar sind.

## Patentansprüche

1. Energiezuführung von einer ortsfesten Quelle (1) zu einem beweglichen Luftkissenfahrzeug über zwei separaten Schlauchzweige, die über zwei im konstanten Abstand zwangsgeführte Umlenkwagen (4, 5) mittels zweier Kupplungen (2, 6) verbunden sind, **dadurch gekennzeichnet, daß** die separaten Schlauchzweige zu einem flexiblen Ringkanal (3) geschlossen sind, und der flexible Ringkanal (3) aus einem äußeren Trägerschlauch (8) mit einem Einlageschlauch (9) besteht, die eine Verstärkung aufweisen.

2. Energiezuführung nach Anspruch 1, **dadurch gekennzeichnet, daß** zwischen Trägerschlauch (8) und Einlageschlauch (9) weitere Leitungen (10) geführt sind.

3. Energiezuführung nach Anspruch 1 oder 2, **dadurch gekennzeichnet, daß** die Verstärkung ein Textilgewebe ist.

4. Energiezuführung nach Anspruch 1 bis 3, **dadurch gekennzeichnet, daß** die Verstärkung aus Aramidfasern besteht.

## Claims

1. An energy supply from a stationary source (1) to a mobile air-cushion vehicle through two separate hose branches which are connected by means of two couplings (2, 6) and via two guided deflection pulleys (4, 5) that are spaced apart by a constant distance, **characterized in that** the separate hose branches are closed to form a flexible ring duct (3) and that the flexible ring duct (3) consists of an outer carrier hose (8) with an inner insertion hose (9), said hoses (8, 9) comprising a reinforcement.

2. An energy supply according to Claim 1, **characterized in that** further lines (10) are passed between the carrier hose (8) and the insertion hose (9).

3. An energy supply according to Claim 1 or 2, **characterized in that** the reinforcement consists of a textile fabric.

4. An energy supply according to Claims 1 through 3, **characterized in that** the reinforcement consists of aramide fibers.

## Revendications

1. Alimentation en énergie à partir d'une source fixe (1) vers un véhicule à coussin d'air mobile par l'intermédiaire de deux branches de tuyau séparées, reliées par deux chariots de déviation à guidage forcé avec un espacement constant (4, 5) par l'intermédiaire de deux raccords, **caractérisée en ce que** les branches de tuyau séparées sont fermées en un canal annulaire flexible (3), le canal annulaire flexible (3) comprenant un tuyau de support externe (8) avec un tuyau d'insertion (9) présentant un renforcement.

2. Alimentation en énergie selon la revendication 1, **caractérisée en ce que** des conduites additionnelles (10) sont agencées entre le tuyau de support (8) et le tuyau d'insertion (9).

3. Alimentation en énergie selon les revendications 1 ou 2, **caractérisée en ce que** le renforcement est constitué par un tissu textile.

4. Alimentation en énergie selon les revendications 1 à 3, **caractérisée en ce que** le renforcement est constitué par des fibres aramides.
